Europäisches Patentamt

(19) European Patent Office

Office européen des brevets

(11) Publication number: **0 068 890**
**B1**

## (12) EUROPEAN PATENT SPECIFICATION

(45) Date of publication of patent specification: **24.01.90**

(51) Int. Cl.⁵: **G 06 F 1/00, H 01 R 13/707**

(21) Application number: **82303409.5**

(22) Date of filing: **29.06.82**

(54) Power supply module in CRT display terminal.

(30) Priority: **29.06.81 US 278244**

(43) Date of publication of application:
**05.01.83 Bulletin 83/01**

(45) Publication of the grant of the patent:
**24.01.90 Bulletin 90/04**

(84) Designated Contracting States:
**DE FR GB IT SE**

(56) References cited:
**FR-A-1 255 844**
**GB-A-2 011 736**
**US-A-3 708 618**

**IBM TECHNICAL DISCLOSURE BULLETIN, vol. 19, no. 6, November 1976, page 1975, New York (USA); C. SUTTON: "Safety plug" The whole document**

(73) Proprietor: **Honeywell Information Systems Inc.**
**200 Smith Street**
**Waltham County of Middlesex, Massachusetts 02154 (US)**

(72) Inventor: **Hall, Roger L.**
**5 Norwich Road**
**Nashua New Hampshire (US)**
Inventor: **Conroy, Walter J.**
**4 Magnolia Drive**
**Acton Massachusetts 01720 (US)**

(74) Representative: **Votier, Sidney David et al**
**CARPMAELS & RANSFORD 43, Bloomsbury Square**
**London WC1A 2RA (GB)**

Courier Press, Leamington Spa, England.

## Description

The invention relates generally to cathode ray tube display terminals, and more particularly to pluggable power supply modules for such terminals.

Many data processing systems have a cathode ray tube (CRT) display as an element of an operator's console.

Data processing applications are expanding more and more from batch processing to on-line processing. In batch processing applications, an operator at the operator's console controls the data processor. In on-line processing, a number of CRT display terminals may be coupled to a data processing system via communication lines. An operator at each terminal has access to the data processor.

The use of CRT display terminals has proliferated, and high effectiveness is thereby required of the terminals with respect to both the product and maintenance.

Early CRT display terminals were of an integrated design. The power supply was wired into the terminal, making trouble shooting and parts replacement costly. In order to make trouble shooting and repair less costly, the elements of the CRT display terminal were modularised, and were made pluggable. This enabled the customer at a remote site to make temporary repairs by replacing elements thus eliminating a repair service call. In particular, the power supply was made pluggable. A single finger hole was molded into the power supply for grasping the power supply in order to remove it. This solution, however, presented some problems. Excessive force for one finger was required to remove the power supply. Also, if the power was removed when the display terminal was in a "Power On" condition, there was a possibility that the electrical components would be damaged.

Accordingly, the main object of the invention is to provide a CRT display terminal with an improved module design.

Accordingly the present invention provides a CRT display terminal with a power supply module mounted on the chassis of the terminal by means of a slide, and including connector fingers which engage a fixed connector when the power supply module is fully inserted in the terminal, the power supply module being coupled to a power source through an electrical plug, characterized in that the power supply module comprises:

a moulded back plate having a recessed socket for receiving the power supply plug and handle, pivotally mounted on the moulded plate and arranged so that the handle is trapped between the moulded plate and the plug when the plug is inserted into the socket, whereby an operator is prevented from grasping the handle without first removing the plug.

A CRT display terminal embodying the invention will now be described, by way of example, with reference to the drawings, in which:

Figure 1 is an exploded view of the terminal from the rear;

Figure 2 is a detailed exploded view of the power supply; and

Figure 3 is a cross-section view of molded back 30.

## Introductory Summary

A CRT display terminal has a power supply module coupled to the terminal hardware by means of a fixed slide and a fixed connector. An AC line cord with a three-prong plug connects with the power supply. A hinged wire bail handle is snapped into the molded dress back of the power supply for ease of removal of the power supply from the terminal. The three-prong plug traps the hinged handle in a recess, thereby preventing an operator from grasping the handle without first removing the plug. This guarantees that the AC power is unplugged from the power supply before the power supply is removed from the terminal.

## Detailed Description

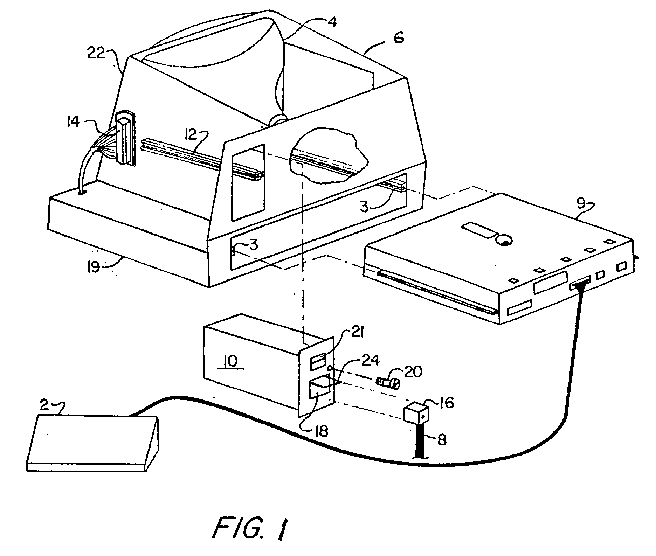

Figure 1 shows the cathode ray tube (CRT) display terminal, which includes a keyboard 2, a cathode ray tube (CRT) display 4, a cover 6, a line cord 8, a logic board enclosure assembly 9 supported by a pair of slides 3 and plugged into a connector (not shown), and a power supply module 10 supported by a slide 12 and plugged into a connector 14. A screw 20 fastens the power supply 10 to the slide 12. A pivoted handle 24 is snapped into the moulded back 30 of the power supply 10. The line cord 8 includes a plug 16 which is plugged into a receptacle 18 trapping the handle 24. The power supply 10 is removed from the CRT display terminal by loosening screw 20, removing plug 16 from receptacle 18, and pulling pivoted handle 24 which is now free. The power supply 10 will be guided by slide 12 and may be removed from the rear of the CRT display terminal. This results in external power being removed from power supply 10 before power supply removal, regardless of the position of power switch 21.

Figure 2 shows the power supply module 10. A moulded back 30 fastened to a frame 34 supports the end of the pivoted handle 24. Openings in moulded back 30 provide access to the power switch 21 and the receptacle 18. Slide 36, mounted on frame 34, engages slide 12 of Figure 1, guiding the connector fingers 31 of a printed circuit board 33 into connector 14.

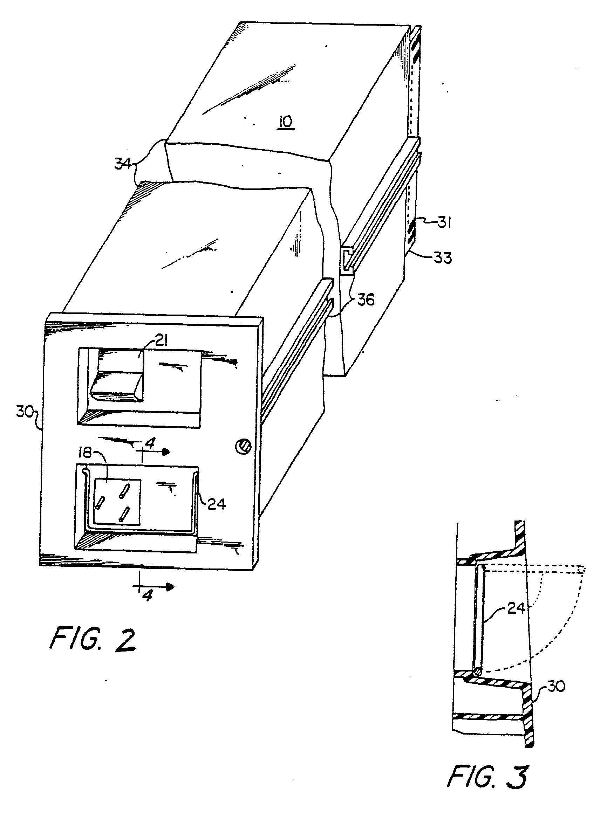

Figure 3 is a cross-section view of moulded back 30 to show the movement of handle 24 with plug 16 removed.

## Claims

1. A CRT display terminal with a power supply module (10) mounted on the chassis of the terminal by means of a slide (12), and including connector fingers (31) which engage a fixed connector (14) when the power supply module is fully inserted in the terminal, the power supply module being coupled to a power source through an electrical plug (16), characterized in that the power supply module comprises a molded back plate having a recessed socket (18) for receiving the power supply plug, and a handle (24) pivotally mounted on the moulded plate and arranged so that the handle is trapped between the moulded plate and the plug when the plug is inserted into the socket, whereby an operator is prevented from grasping the handle without first removing the plug.

2. The terminal of Claim 1, characterized in that the moulded plate includes an opening (24) for receiving a screw, by means of which the power supply module may be fastened to the CRT terminal chassis.

3. The terminal of either previous Claim, characterized in that the moulded plate includes a further opening through which a power switch (21) is accessible.

## Patentansprüche

1. Bildschirmgerät mit Stromversorgungsmodul (10) auf dem Baugruppenträger des Geräts in einem Einschub (12) montiert, einschließlich Messerstifte (31) für das Einrücken in eine feste Steckbüchse (14) bei vollem Einschieben des Leistungsversorgungsmoduls in das Gerät, wobei das Leistungsversorgungsmodul durch einen elektrischen Stecker (16) mit der Stromversorgung verbunden wird, dadurch gekennzeichnet, daß eine versenkte Steckbüchse (18) für den Leistungsversorgungsstecker in der Kunststoff-Rückwand des Leistungsversorgungsmoduls vorhanden ist und ein Handgriff (24) schwenkbar auf der Kunststoffplatte derart montiert ist, so daß nach Einstecken des Steckers in die Steckbüchse der Handgriff zwischen Kunststoffplatte und Stekker arretiert wird, so daß ein Operateur den Handgriff nicht ohne vorheriges Herausziehen des Steckers anfassen kann.

2. Gerät nach Anspruch 1, dadurch gekennzeichnet, daß die Kunststoffplatte eine Öffnung (24) für eine Schraube enthält, durch welche das Leistungsversorgungsmodul am Träger des Sichtgeräts befestigt werden kann.

3. Gerät nach einem der vorhergehenden Ansprüche, dadurch gekennzeichnet, daß die Kunststoffplatte eine weitere Öffnung enthält, durch welche ein Leistungsschalter (21) zugänglich ist.

## Revendications

1. Un terminal de visualisation à tube cathodique ayant un module d'alimentation de courant (10) monté sur le châssis du terminal au moyen d'une coulisse (12), et comprenant des doigts de raccordement (31) qui s'engagent dans un connecteur fixe (14) lorsque le module d'almentation de courant est complètement introduit dans le terminal, le module d'alimentation de courant étant raccordé à une source d'alimentation électrique par voie d'une fiche de courant électrique (16), caractérisé par le fait que le module d'alimentation de courant comprend une plaque arrière moulée munie d'une prise en retrait (18) destinée à recevoir la fiche d'alimentation de courant, et une poignée (24) montée par basculement sur la plaque moulée et disposée de sorte que la poignée est coincée entre la plaque moulée et la fiche quand la fiche est introduite dans le retrait et de sorte que l'opérateur ne puisse saisir la poignée sans d'abord avoir enlevé la fiche.

2. Le terminal décrit dans la Revendication 1 caractérisé par le fait que la plaque moulée comprend un orifice (24) destiné à recevoir une vis au moyen duquel le module d'alimentation de courant peut être attaché au châssis du terminal à tube cathodique.

3. Le terminal décrit dans l'une ou l'autre des Revendications qui précèdent caractérisé par le fait que la plaque moulée contient un deuxième orifice par voie duquel un interrupteur de mise sous tension (21) est accessible.

FIG. 1

FIG. 2

FIG. 3